# FASCICULE DE BREVET EUROPEEN

(11) **EP 3 155 234 B1**
(45) Date de publication et mention de la délivrance du brevet: **23.05.2018**
(21) Numéro de dépôt: 15732861.8
(22) Date de dépôt: 11.06.2015
(51) Int. Cl.: F01D 25/16, F02C 7/32

(54) **TURBOMACHINE COMPRENANT UN SYSTEME D'ENTRAINEMENT D'UN EQUIPEMENT TEL QU'UN BOITIER D'ACCESSOIRES**
TURBINENMOTOR MIT EINEM ANTRIEBSSYSTEM FÜR EINE VORRICHTUNG WIE EIN HILFSAGGREGATGEHÄUSE
A TURBINE ENGINE COMPRISING A DRIVE SYSTEM FOR A DEVICE SUCH AS AN ACCESSORIES CASE

(30) Priorité: 12.06.2014 FR 1455346
(43) Date de publication de la demande: 19.04.2017
(73) Titulaire: SAFRAN AIRCRAFT ENGINES, 75015 Paris (FR)
(72) Inventeur: LEPRETRE, Jean-Baptiste, Etienne, Bernard, 77550 Moissy Cramayel Cedex (FR)
(74) Mandataire: Pichat, Thierry
(86) Numéro de dépôt international: PCT/FR2015/051547
(87) Numéro de publication internationale: WO 2015/189522

(56) Documents cités:
- EP-A2- 2 381 080
- WO-A1-2008/082334
- FR-A1- 2 921 423
- US-A1- 2014 135 134

## Description

L'invention se rapporte à une turbomachine comprenant un système d'entrainement d'un équipement tel qu'un boitier d'accessoires de la turbomachine. Classiquement, un boitier d'accessoires constitue un équipement servant à supporter et à entraîner mécaniquement d'autres équipements appelés les accessoires, tels que des générateurs électriques, des pompes à huile ou à carburant, ou autres, nécessaires au fonctionnement de la turbomachine ou à celui de l'aéronef sur lequel la turbomachine est montée. Afin d'assurer cet entrainement, on prélève la puissance requise sur un arbre principal de la turbomachine, généralement grâce à un arbre de renvoi radial engrené avec l'arbre principal, pour transmettre mécaniquement cette puissance au boitier d'accessoires.

Un turboréacteur à double corps comprend deux arbres coaxiaux, l'un, dit basse pression ou BP, reliant le compresseur basse pression à la turbine basse pression et formant ensemble le corps BP, l'autre, dit haute pression ou HP, reliant le compresseur haute pression à la turbine haute pression et formant ensemble le corps HP. Dans le cas d'un tel moteur, l'arbre de renvoi radial est généralement logé dans un bras structural de support d'un carter annulaire traversé par le flux secondaire, ce carter annulaire étant généralement appelé carter intermédiaire. Une extrémité radialement intérieure de l'arbre de renvoi radial comporte généralement un pignon conique coopérant avec un pignon solidaire de l'arbre principal formé par le corps haute-pression. L'autre extrémité est reliée mécaniquement au boitier d'accessoires comprenant une pluralité d'engrenages assurant l'entrainement des autres équipements, c'est-à-dire les accessoires. Lorsque le moteur est à double flux, l'arbre de renvoi radial traverse les deux veines de flux primaire et de flux secondaire respectivement car le boîtier d'accessoires, dit aussi AGB pour " Accessory Gear Box", est généralement monté extérieurement sur le carter de la soufflante générant le flux secondaire.

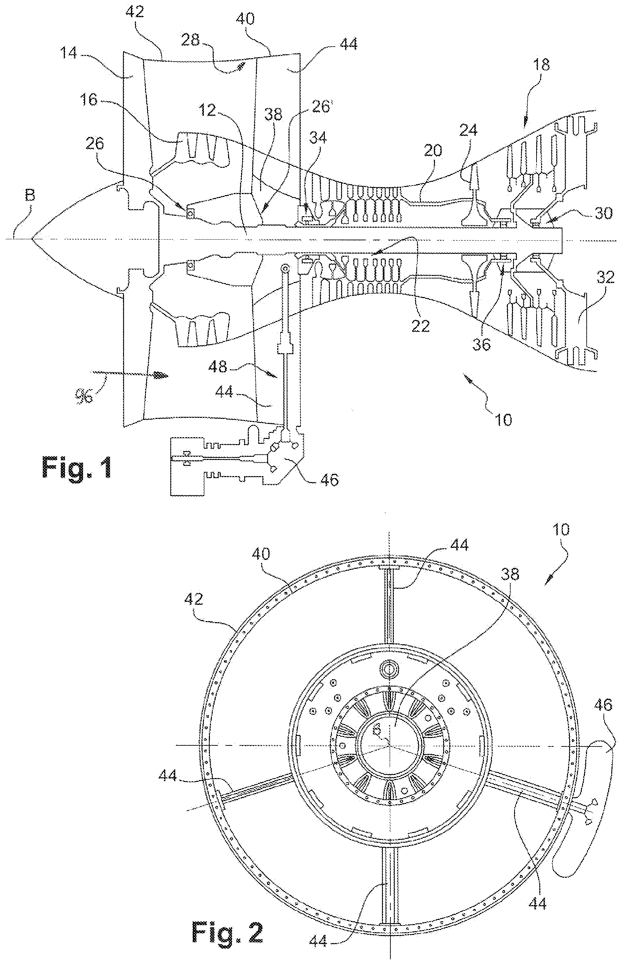

L'avionneur peut spécifier de monter le boitier d'accessoires dans le secteur angulaire des six heures, ou encore des huit heures environ de la turbomachine. Afin de permettre l'entrainement des équipements auxiliaires que constituent les accessoires, il est courant, comme illustré par la publication FR2971816A1 et en particulier en référence à la figure 2 de cette publication, de former un premier bras structural à six heures, ayant un rôle de support du carter intermédiaire et reliant le moyeu de la turbomachine au carter intermédiaire, un deuxième bras structural analogue à douze heures, et un troisième bras structural dirigé dans les huit heures ou les quatre heures, ce troisième bras étant dédié au passage d'un arbre de renvoi vers un boitier d'accessoires disposé dans le prolongement de l'arbre. Les bras structuraux servent également au guidage de canalisations et de harnais entre un compartiment central et un compartiment de soufflante de la turbomachine. Toutefois, ce cas de figure implique donc de former au moins trois bras radiaux à travers au moins la veine secondaire de la turbomachine, sans nécessité d'une symétrie particulière de positionnement, comme par exemple tels que les bras 44 représentés sur la figure 2 dans la présente. Or, il a été démontré que la présence d'au moins trois bras, telle que dans le cas de figure ci-dessus, déstabilise l'écoulement du flux et crée des perturbations, ce qui diminue les performances aérodynamiques de la turbomachine.

Afin d'optimiser l'écoulement au moins du flux secondaire, la demanderesse a cherché à ne conserver seulement que deux bras structuraux de support du carter intermédiaire, l'un à douze heures, l'autre à six heures. Ces deux bras sont donc positionnés symétriquement dans les veines d'écoulement de flux, et sont moins perturbateurs qu'un montage impliquant trois bras ou plus, ce qui améliore au final les performances aérodynamiques de la turbomachine. Pour des raisons d'encombrement vertical de la turbomachine, le boitier d'accessoires est disposé dans une direction relativement éloignée angulairement des bras à six heures et douze heures, par exemple à huit heures environ de la turbomachine. Dans ce cas, le bras à six heures accueille non seulement des canalisations et des harnais mais également l'arbre de renvoi radial servant à l'entrainement d'un équipement tel qu'un boitier d'accessoires et donc finalement l'entrainement des équipements auxiliaires formés par les accessoires.

Une difficulté majeure entrave cependant la réalisation d'une configuration telle que décrite ci-dessus. En effet, une telle réalisation implique nécessairement la mise en place de moyens de transfert de puissance à l'extérieur du carter intermédiaire, entre l'extrémité radialement extérieure de l'arbre de renvoi radial formé à six heures de la turbomachine et le boitier d'accessoires formé à huit heures environ de la turbomachine. Ces moyens impliquent nécessairement la présence de pièces volumineuses, servant en particulier à reprendre la rotation de l'arbre de renvoi radial pour la transférer, selon un autre axe par exemple sensiblement tangentiel au carter intermédiaire de la turbomachine, vers le boitier d'accessoires. Ces pièces prendront par exemple la forme d'un pignon conique en prise avec l'arbre de renvoi radial, et apte à être connecté à un arbre de transfert tangentiel, et devront par ailleurs se trouver dans une enceinte fixe lubrifiée permettant un positionnement précis des pièces entre elles. Dans le cas concerné dans la présente, la nacelle qui entoure, maintient et protège la turbomachine, et dont les dimensions sont imposées par l'avionneur, ne laisse qu'un espace radial très réduit dans les six heures de la turbomachine entre le carter intermédiaire et un capot de la nacelle, afin de limiter l'encombrement vertical de la nacelle. La mise en place des moyens de transfert n'est donc pas évidente et demande une réflexion poussée sur leur intégration.

La présente invention apporte donc une solution simple, efficace et économique d'intégration des moyens de transfert précités.

A cette fin, elle propose une turbomachine, telle qu'un turboréacteur ou un turbopropulseur, s'étendant selon un axe moteur et comprenant :
- au moins un bras de guidage creux s'étendant radialement par rapport à l'axe moteur depuis un moyeu jusqu'à un carter annulaire de la turbomachine, et présentant une extrémité radialement extérieure qui débouche sur une ouverture dudit carter annulaire,
- un arbre de renvoi radial situé dans ledit bras de guidage et destiné à entrainer en rotation au moins un équipement agencé en périphérie dudit carter annulaire,
caractérisée en ce qu'elle comprend en outre un boitier de transfert disposé en regard de l'ouverture du carter annulaire et comprenant des moyens de transfert de puissance en rotation entre l'arbre de renvoi radial et l'équipement,
et en ce que le bras de guidage est muni de, et en particulier présente, à son extrémité radialement extérieure, une portion élargie par laquelle il débouche sur l'ouverture du carter annulaire et dans laquelle est logée une partie du boitier de transfert.

Dans la présente, on appelle bras de guidage d'un carter intermédiaire un bras structural de support du carter intermédiaire pouvant servir au passage de harnais électriques et de canalisations, voire également au passage d'un arbre de renvoi radial.

L'invention permet ainsi d'adapter un bras de guidage d'un carter intermédiaire afin que celui-ci puisse accueillir à son extrémité radialement extérieure au moins une partie du boitier de transfert. Alors que la section d'un bras de guidage est habituellement seulement dimensionnée pour accueillir au plus un arbre de renvoi ainsi que des harnais et des canalisations, le bras de guidage possède ici une portion radialement extérieure creuse de section plus grande, donc élargie, disposée à l'intérieur du carter intermédiaire, et qui dispose de l'espace nécessaire pour accueillir une partie du boitier de transfert. Le boitier de transfert est donc positionné en partie radialement à l'intérieur du carter intermédiaire, ce qui permet d'installer le boitier dans le faible espace radial laissé à l'extérieur du carter jusqu'à un capot de la nacelle, et répond donc aux problèmes d'intégration cités plus haut.

De plus, l'invention permet de raccourcir la longueur de l'arbre de renvoi, puisque ce dernier est alors relié aux moyens de transfert à une distance radiale plus courte par rapport à l'axe central de la turbomachine. Cet aspect est particulièrement avantageux, car il permet d'apporter les modifications suivantes à la turbomachine :
- soit l'augmentation du régime critique de rotation de l'arbre de renvoi, en conséquence de la réduction en longueur de l'arbre et sans augmenter le diamètre de l'arbre, ce qui permet d'améliorer les marges de sécurité du fonctionnement de la turbomachine, ou encore d'augmenter le régime de fonctionnement de la turbomachine sans que le régime de rotation de l'arbre dépasse le régime critique et donc sans risquer d'endommagement particulier de l'arbre ;
- soit la diminution du diamètre de l'arbre de renvoi, tout en conservant son régime critique de rotation d'origine, ce qui permet de diminuer la taille de la section du bras de guidage sur toute sa longueur, exceptée la portion élargie, et améliore alors les performances aérodynamiques de la turbomachine.

Vis-à-vis du document antérieur, FR2921423, on notera qu'aucun des pignons coniques 41 et 43 n'appartient au bras de guidage 33/38 concerné. En effet, le pignon conique 41 est fixé à l'extrémité de l'arbre de transmission haute pression 33 et le pignon conique 43 est fixé à l'extrémité de l'arbre de transmission basse pression 38. Il s'agit donc de pièces rapportées. Notamment, aucun bras de guidage n'est muni de, et en particulier présente, à son extrémité radialement extérieure, une portion élargie comme dans l'invention.

Préférentiellement, la turbomachine de la présente solution est à double flux, et le bras de guidage traverse une veine de flux secondaire de la turbomachine.

Préférentiellement, les moyens de transfert de puissance en rotation du boitier de transfert comprennent un arbre creux comportant :
- des cannelures intérieures à une extrémité radialement intérieure de l'arbre creux, lesdites cannelures étant engagées entre des cannelures extérieures formées à une extrémité radialement extérieure de l'arbre de renvoi,
- et un pignon conique coaxial à l'arbre creux,
l'arbre creux du boitier de transfert étant maintenu par des roulements disposés à l'intérieur d'une enceinte du boitier de transfert, ladite enceinte étant positionnée en partie dans la portion élargie du bras de guidage radialement à l'intérieur du carter annulaire.

Dans un mode de réalisation particulier, l'enceinte du boitier de transfert comprend une partie principale et une partie de jonction raccordée de façon étanche à la partie principale, et au moins un desdits roulements est positionné au niveau d'une ouverture de la partie principale sur laquelle la partie de jonction se raccorde.

Selon une autre caractéristique, au moins un desdits roulements se situe en partie radialement au niveau de l'ouverture du carter annulaire.

L'ensemble de la structure du boitier de transfert a ainsi été rapproché de l'axe central de la turbomachine, en mettant à profit l'espace disponible dans la portion élargie du bras de guidage.

Avantageusement, l'enceinte du boitier de transfert comprend une ouverture à travers laquelle s'étend l'arbre creux du boitier de transfert, ladite ouverture étant reliée à étanchéité à la portion élargie du bras de guidage, de manière à former une seule cavité étanche comprenant l'intérieur du bras de guidage et l'intérieur de l'enceinte. Des moyens d'étanchéité reliant l'enceinte au bras de guidage peuvent avantageusement être disposés à l'intérieur du carter annulaire de la turbomachine.

Cette mise à étanchéité entre le bras de guidage et l'enceinte du boitier de transfert permet notamment la mise en place d'un circuit de lubrification commun entre le bras de guidage et le boitier de transfert, dans lesquels des arbres sont mis en rotation de manière solidaire.

Selon une autre caractéristique de l'invention, l'extrémité radialement extérieure de l'arbre de renvoi radial est située radialement à l'intérieur du carter de la turbomachine. L'arbre de renvoi est donc plus court que dans l'art antérieur, où il s'étend radialement au-delà du carter de la turbomachine. Il en découle les avantages déjà cités plus haut.

Avantageusement, la portion élargie du bras de guidage peut comprendre au moins une bride fixée sur le carter de la turbomachine depuis l'intérieur. Cette bride permet de positionner et de fixer le bras de guidage par rapport au carter de la turbomachine, ce qui assure son maintien structurel dans la turbomachine.

Avantageusement, la turbomachine comprend en outre un circuit de vidange d'huile du boitier de transfert, dans lequel, au moins deux pompes de récupération d'huile sont reliées respectivement à deux orifices d'évacuation d'huile traversant chacun une paroi de fond du boitier de transfert.

Ces deux orifices d'évacuation d'huile sont préférentiellement éloignés l'un de l'autre selon une direction transversale de la turbomachine.

Ces pompes permettent la vidange de l'huile du circuit d'huile, quelle que soit la position et l'inclinaison de la turbomachine en fonctionnement. En effet, lorsque la turbomachine est embarquée sur un avion, en fonction des phases de vol, la turbomachine pourra se retrouver inclinée d'un côté ou de l'autre par rapport à l'horizontale. En fonction de ses phases de vol, les pompes pourront soit vidanger l'huile simultanément, soit à tour de rôle.

La turbomachine comprendra dans un cas préféré deux bras de guidage s'étendant sensiblement radialement depuis deux côtés opposés du moyeu jusqu'au carter annulaire de la turbomachine, le boitier de transfert étant disposé radialement à l'extérieur par rapport à l'un des bras de guidage.

De préférence, les deux bras de guidage opposés sont respectivement un bras de guidage supérieur et un bras de guidage inférieur s'étendant sensiblement verticalement, le boitier de transfert étant disposé sous le bras de guidage inférieur.

Un arbre de transfert pourra relier en rotation le boitier de transfert à un boitier d'accessoires de la turbomachine disposé en périphérie du carter annulaire de la turbomachine dans un secteur angulaire différent des secteurs angulaires où se situent les deux bras de guidage opposés, soit le bras de guidage supérieur et le bras de guidage inférieur. On assure ainsi l'entrainement des équipements reliés au boitier d'accessoires, alors que ce dernier n'est pas situé au regard de l'arbre de renvoi radial.

Avantageusement, le boitier d'accessoires peut porter un générateur électrique entrainé par l'arbre de renvoi radial, par l'intermédiaire notamment des moyens de transfert et de l'arbre de transfert tangentiel. Ce générateur permet de convertir l'énergie cinétique produite par la turbomachine en énergie électrique, disponible par exemple pour un avion portant la turbomachine. Le générateur électrique est par exemple entrainé directement par un bras d'accessoire rotatif du boitier d'accessoires.

Selon une réalisation particulière, un espace annulaire est formé entre le carter et une nacelle à l'intérieur de laquelle est agencée la turbomachine, ledit espace annulaire étant radialement de dimension plus réduite au niveau du secteur angulaire où se trouve le boitier de transfert qu'au niveau du secteur angulaire dans lequel se situe ledit au moins un équipement entrainé en rotation, cet équipement pouvant par exemple être un équipement auxiliaire tel qu'un générateur électrique et monté sur un boitier d'accessoires de telle façon que l'ensemble présente un encombrement radial bien plus important que celui du boitier de transfert.

D'autres avantages et caractéristiques de l'invention apparaîtront à la lecture de la description suivante faite à titre d'exemple non limitatif et en référence aux dessins annexés dans lesquels :
- la figure 1 est, en coupe axiale, une vue générale d'une turbomachine à double flux et double corps selon une technique antérieure connue ;
- la figure 2 est une vue de l'aval d'un carter intermédiaire utilisé dans la turbomachine de la figure 1 ;
- la figure 3 est un schéma, de l'amont, d'une architecture d'ensemble propulsif, avec la turbomachine ;
- la figure 4 est une vue plus détaillée du boitier de transfert de la figure 3, et de l'extrémité extérieure du bras de guidage où s'étend le bras de renvoi d'entrainement des équipements du boitier d'accessoires, selon une coupe axiale.

Une turbomachine 10 connue à double flux avec ses différents composants principaux est illustrée schématiquement sur la figure 1. Il comprend un premier arbre 12 reliant, en amont, un rotor de soufflante 14 et les premiers étages 16 de compresseur à la turbine basse pression 18 ; l'ensemble forme le corps basse pression, ou BP. Coaxial au premier arbre, un deuxième arbre 20 en forme de tambour, relie les étages 22 haute pression du compresseur à la turbine 24 haute pression ; l'ensemble forme le corps haute pression, ou HP, avec la chambre de combustion (non représentée). L'arbre 12 est supporté, en amont, par les paliers 26 et 26' montés sur le carter 28 que l'on désigne comme carter intermédiaire et, en aval, par le palier 30 monté sur le carter d'échappement 32. L'arbre HP est supporté ici par le palier 34 du carter intermédiaire 28 et à l'aval de l'arbre 12 par l'intermédiaire du palier inter-arbre 36.

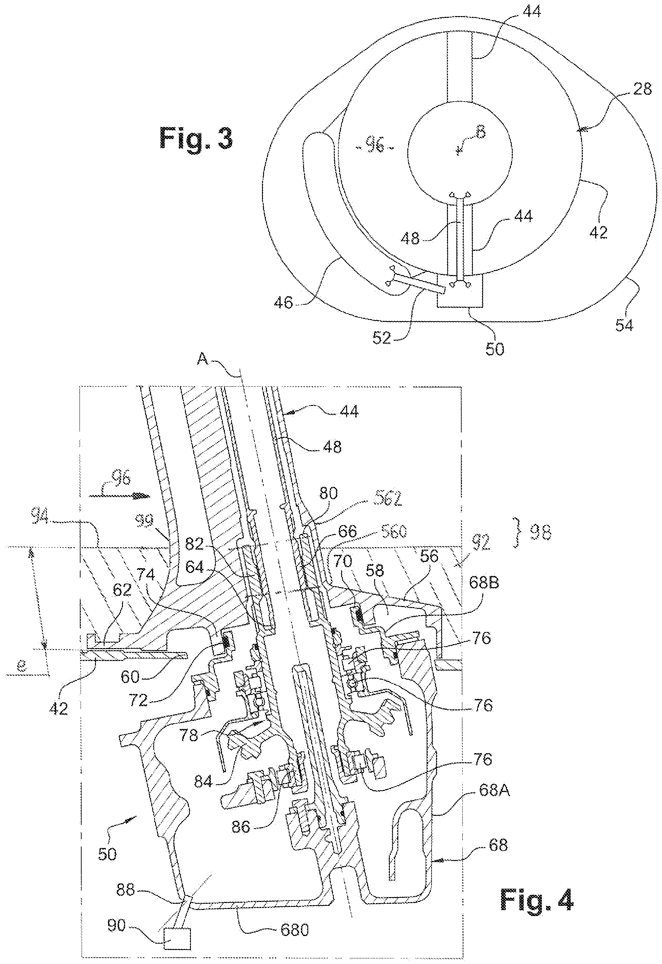

Figures 1 et 3 on a repéré B l'axe longitudinal de la turbomachine et 96 le flux d'air secondaire de cette turbomachine, qui lèche notamment les bras 44 mentionnés ci-après.

Comme illustré sur les figures 1 et 2, le carter intermédiaire 28 comprend une virole extérieure 40 dans le prolongement du carter de soufflante 42. Des bras de guidage radiaux 44 relient la virole 40 à un moyeu 38 supportant les paliers 26, 26' et 30, Ce carter intermédiaire 28 est constitué au moins en partie d'une pièce venue de fonderie sur laquelle on a rapporté éventuellement les bras radiaux. Des équipements auxiliaires, tels que générateurs électriques et pompes à carburant ou à huile, sont montés sur un boîtier d'accessoires 46, comme cela est connu, que l'on désigne dans le domaine par AGB. Le boitier d'accessoires 46 est monté à l'extérieur sur le carter de soufflante 42 à un emplacement qui en permet l'accès pour la maintenance, dans un secteur angulaire de la turbomachine 10 correspondant aux huit heures environ de cette dernière. La turbomachine est en effet prévue pour être montée dans une orientation particulière, avec une partie haute correspondant aux douze heures, et une partie basse correspondant aux six heures. Les équipements sont reliés mécaniquement à un arbre central 12, 20 de la turbomachine par l'intermédiaire d'un arbre de renvoi radial 48, qui est logé dans un bras de guidage radial 44 du carter intermédiaire 28 s'étendant dans le secteur angulaire des huit heures environ, directement en direction du boitier d'accessoires 46. Deux autres bras de guidage 44 du carter intermédiaire 28 s'étendent dans les secteurs des douze heures et des six heures, et servent par exemple au guidage de harnais électriques et de canalisations de carburant, d'huile, etc.

Une telle structure comprenant plus de deux bras de guidage 44 sur le carter intermédiaire 28 présente les inconvénients évoqués plus haut.

L'invention propose donc une solution illustrée par les figures 3 et 4. On voit à la figure 3 que seulement deux bras de guidage 44 du carter intermédiaire 28 ont été conservés à douze heures et à six heures, ce qui améliore l'écoulement des flux au moins dans la veine secondaire de la turbomachine, et en améliore donc les performances aérodynamiques. La turbomachine est ici à double flux, et chaque bras de guidage traverse une veine de flux secondaire de la turbomachine.

Afin de relier mécaniquement un arbre central de la turbomachine à au moins un équipement, dans cet exemple à un ensemble d'équipements montés sur un boitier d'accessoires 46 qui se situe dans le secteur des huit heures, on fait passer l'arbre de renvoi radial 48 dans le bras de guidage 44 des six heures. On relie l'extrémité extérieure de cet arbre de renvoi 48 à un boitier de transfert 50, dont la fonction est de transférer le mouvement de rotation de l'arbre de renvoi 48 dans la direction du boitier d'accessoires 46, par l'intermédiaire d'un arbre de transfert 52 par exemple sensiblement tangentiel au carter de soufflante 42, et reliant le boitier de transfert 50 au boitier d'accessoires 46. On notera que l'arbre de renvoi radial 48 n'est pas nécessairement perpendiculaire à l'arbre central de la turbomachine, et peut former un certain angle par rapport à une direction strictement radiale c'est-à-dire perpendiculaire à l'arbre central, comme cela est visible sur la figure 4.

Au moins un équipement, non représenté sur la figure et comprenant par exemple un générateur électrique, est monté sur le boitier d'accessoires 46, de telle façon que l'ensemble constitué par le boitier d'accessoires et l'équipement présente un encombrement radial bien plus important que celui du boitier de transfert. Ces différences d'encombrement radial des organes autour du carter annulaire de soufflante 42 conduisent à ce qu'une nacelle 54 accueillant la turbomachine 10 aura préférablement une forme non axisymétrique, comme visible sur la figure 3 et détaillé plus loin.

Par ailleurs, il est entendu qu'à la place d'un boitier d'accessoires, il est envisageable d'avoir un équipement isolé, par exemple un générateur électrique. Il est également envisageable que l'équipement isolé soit constitué par un autre boitier de transfert, à distance du boitier de transfert 50 et duquel repart au moins un arbre de transfert pour entraîner des équipements plus éloignés.

Dans la présente, on considère le carter 42 comme un carter annulaire qui comprend le carter de soufflante et la virole extérieure du carter intermédiaire. Ce carter annulaire 42 n'est pas nécessairement cylindrique, et peut donc présenter un diamètre qui varie en fonction de la position longitudinale considérée dans la direction de l'axe central de la turbomachine. Par ailleurs, comme on peut le voir sur la figure 3, des contraintes dimensionnelles sont imposées par la nacelle 54 accueillant la turbomachine 10. En particulier, la nacelle 54 présente une distance à l'axe central de la turbomachine qui varie dans la direction périphérique. Plus particulièrement, la nacelle entoure le carter annulaire 42 de la turbomachine de manière à laisser un espace annulaire de dimension radiale variable tout autour de ce carter annulaire. Afin de réduire l'encombrement en hauteur de la nacelle, l'espace radial disponible aux six heures de la turbomachine, pour le boitier de transfert, est relativement réduit, et a donc rendu nécessaire le développement d'une solution particulière de réalisation du boitier de transfert 50, illustrée en détails à la figure 4.

On voit à la figure 4 que le bras de guidage 44 des six heures, qui est creux, et dans lequel s'étend l'arbre de renvoi radial 48, possède à son extrémité radialement extérieure une portion élargie 56 par laquelle elle est reliée au carter de soufflante 42 de la turbomachine par l'intérieur. Ainsi, le bras de guidage 44 possède ou présente la portion élargie 56, ici d'une seule pièce avec elle.

La portion élargie 56, creuse comme le bras de guidage 44, forme donc une cavité, ou un logement 58, dans l'extrémité extérieure de ce bras de guidage. Plus particulièrement, la paroi délimitant le bras de guidage 44, s'éloigne de l'axe A de l'arbre de renvoi 48 au niveau de son extrémité extérieure par rapport à l'axe central de la turbomachine, avant de se raccorder au carter de soufflante 42 tout autour d'une ouverture 60 de ce carter annulaire 42 formée pour le passage de l'arbre de renvoi 48. De cette façon, la portion élargie 56 débouche sur l'ouverture 60 du carter annulaire.

Une bride 62 est formée sur la paroi du bras de guidage 44 et s'appuie contre le carter de soufflante 42 par l'intérieur, afin d'y autoriser une fixation. L'extrémité extérieure 64 de l'arbre de renvoi 48 est formée au niveau de l'élargissement 56, à une distance radiale de l'axe central de la turbomachine plus courte que le rayon du carter de soufflante 42. L'extrémité extérieure 64 de l'arbre de renvoi 48 comprend des cannelures longitudinales 66 formées sur sa surface extérieure.

Le boitier de transfert 50 est agencé en partie dans l'ouverture 60 du carter de soufflante 42 et dans la cavité 58 du bras de guidage 44 formée par la portion élargie 56. Le boitier de transfert 50 comprend une enceinte externe fixe 68 qui comprend une partie principale 68A et une partie de jonction 68B raccordée de façon étanche à la partie principale 68A. Cette partie de jonction 68B sert à raccorder l'enceinte 68 à la portion élargie 56 du bras de guidage, et comporte une ouverture par exemple circulaire délimitée par une paroi cylindrique 70 entourée par un joint annulaire 72. Cette ouverture est agencée à l'intérieur d'une paroi cylindrique coaxiale 74 formée en saillie sur la portion élargie 56 du bras de guidage, de manière à plaquer à étanchéité le joint 72 entre les deux parois cylindriques 70, 74. Ainsi, la cavité à l'intérieur du bras de guidage 44, où s'étend l'arbre de renvoi 48, et la cavité à l'intérieur de l'enceinte communiquent à étanchéité.

A l'intérieur de l'enceinte 68 est maintenu, par une série de roulements 76, un arbre creux 78 de même axe A que l'axe de l'arbre de renvoi 48. L'extrémité 80 de l'arbre creux 78 dirigée vers l'axe central de la turbomachine est formée autour de l'extrémité 64 cannelée de l'arbre de renvoi 48, dans le bras de guidage 44. Plus particulièrement, des cannelures longitudinales 82 sont formées sur la paroi interne de l'arbre creux 78 et s'engagent entre les cannelures 66 de l'arbre de renvoi 48, afin de solidariser les deux arbres 48, 78 en rotation. A l'autre extrémité de l'arbre creux 78, éloignée de l'axe central de la turbomachine, est formé un pignon conique 84. Au montage, la partie de jonction 68B est raccordée à la partie principale 68A de l'enceinte 68 une fois que les éléments susmentionnés du boitier de transfert 50 ont été mis en place dans l'enceinte 68.

Les roulements 76 sont à billes ou à rouleaux, et servent à guider en rotation l'arbre creux 78 dans l'enceinte 68 du boitier de transfert 50. Un roulement à rouleaux et un roulement à billes sont formés autour de l'arbre creux 78 entre les cannelures 82 et le pignon conique 84, et un roulement à rouleaux entoure une portion d'extrémité 86 de l'arbre creux 78 qui s'étend plus à l'extérieur radialement que le pignon conique 84. On pourra noter que le roulement 76 localisé le plus proche de l'axe central de la turbomachine se situe en partie au niveau de l'ouverture 60 du carter de soufflante 42. Plus particulièrement, ce roulement 76 peut être positionné au niveau d'une ouverture de la partie principale 68A de l'enceinte 68 sur laquelle la partie de jonction 68B se raccorde.

Deux orifices 88 sont formés chacun dans une paroi de fond 680 de l'enceinte 68 du boitier de transfert 50, et sont éloignés l'un de l'autre selon une direction transversale de la turbomachine. De cette façon, dans quasiment toutes les attitudes du domaine de vol de l'aéronef équipé de la turbomachine, et notamment en cas de virage même avec un angle important, au moins un des deux orifices 88 constitue un point bas de l'enceinte 68. Ces deux orifices 88 servent à vidanger l'huile circulant dans l'enceinte et le bras de guidage 44 pour lubrifier et refroidir les paliers. Au moins deux pompes 90 de récupération d'huile sont reliées respectivement au deux orifices d'évacuation d'huile 88 pour réaliser un circuit de vidange d'huile du boitier de transfert 50, permettant ainsi de vidanger l'huile dans toutes les attitudes du domaine de vol. Les pompes 90 vidangent l'huile soit simultanément, soit à tour de rôle suivant les attitudes du domaine de vol. Il est envisageable de prévoir au moins un autre orifice 88 associé à une pompe dédiée supplémentaire de récupération. Sur la figure, les deux orifices 88 étant situés l'un derrière l'autre, un seul orifice est représenté.

On pourra aisément mettre l'arbre de transfert tangentiel 52 en prise avec le pignon conique 84 de l'arbre creux 78 du boitier de transfert 50, à travers une ouverture du boitier de transfert non visible sur la figure, car orientée perpendiculairement au plan de coupe de la figure 4, de manière à réaliser le montage de la figure 3.

Figure 4, on notera encore la présence préférée d'un panneau d'atténuation acoustique 92 à l'extrémité radialement extérieure du bras de guidage 44.

Le panneau acoustique 92 s'étendra de préférence à l'intérieur du carter annulaire 42, comme illustré.

On apportera ainsi un maximum d'efficacité à la limitation des bruits et vibrations dans cette zone, sans gêner la mise en oeuvre du boitier de transfert 50 en regard de l'ouverture 60 du carter annulaire.

De fait, il est conseillé que le carter annulaire 42 de la turbomachine soit recouvert intérieurement par un panneau d'atténuation acoustique comportant une surface radialement intérieure 94 léchée par un flux 96 d'air secondaire de la turbomachine, et dans laquelle au moins 90% du volume de la portion élargie 56 du bras de guidage 44 est situé dans l'épaisseur radiale e (parallèlement à l'axe A qui est donc radial par rapport à l' axe B du moteur) du panneau d'atténuation acoustique 92.

On considèrera qu'intérieurement le bras de guidage 44 s'élargit, avec sa portion 56, à partir du changement de pente 560 ou 562 situé au niveau de des cannelures 82 et 66 (zones pouvant évoluer entre les deux niveaux de traits mixtes, figure 4).

Et même de préférence une partie de la portion élargie 56 du bras de guidage représentant moins de 10% du volume de ladite portion élargie (zone radiale 98 figure 4), s'étendra au-delà de la surface radialement intérieure 94 du panneau d'atténuation acoustique 92 et sera profilée (voir par exemple portion 99) de façon à minimiser son impact sur l'écoulement du flux d'air secondaire 96 autour du bras de guidage 44.

Un exemple de cela est illustré figure 4.

On apportera ainsi un maximum d'efficacité à la limitation des bruits et vibrations dans cette zone, sans gêner la mise en oeuvre du boitier de transfert 50 en regard de l'ouverture 60 du carter annulaire ni perturber exagérément l'écoulement 96.

## Revendications

1. Turbomachine (10), telle qu'un turboréacteur ou un turbopropulseur, s'étendant selon un axe moteur et comprenant :
- au moins un bras de guidage (44) creux s'étendant radialement par rapport à l'axe moteur depuis un moyeu (38) jusqu'à un carter annulaire (42) de la turbomachine, présentant une extrémité radialement extérieure fixée audit carter annulaire (42) et qui débouche sur une ouverture (60) dudit carter annulaire,
- un arbre de renvoi radial (48) situé dans ledit bras de guidage (44) et destiné à entrainer en rotation au moins un équipement agencé en périphérie dudit carter annulaire (42),
**caractérisée en ce qu'**elle comprend en outre un boitier de transfert (50) disposé en regard de l'ouverture (60) du carter annulaire et comprenant des moyens de transfert (76, 78) de puissance en rotation entre l'arbre de renvoi radial (48) et l'équipement,
et **en ce que** le bras de guidage (44) est muni, à son extrémité radialement extérieure, d'une portion élargie (56) par laquelle il débouche sur l'ouverture (60) du carter annulaire et dans laquelle est logée une partie du boitier de transfert (50).

2. Turbomachine selon la revendication 1, dans laquelle les moyens de transfert (76, 78) de puissance en rotation du boitier de transfert (50) comprennent un arbre creux (78) comportant :
- des cannelures intérieures (82) à une extrémité radialement intérieure (80) de l'arbre creux, lesdites cannelures étant engagées entre des cannelures extérieures (66) formées à une extrémité radialement extérieure (64) de l'arbre de renvoi (48),
- et un pignon conique (84) coaxial à l'arbre creux,
l'arbre creux (78) du boitier de transfert étant maintenu par des roulements (76) disposés à l'intérieur d'une enceinte (68) du boitier de transfert, ladite enceinte étant positionnée en partie dans la portion élargie (56) du bras de guidage (44) radialement à l'intérieur du carter annulaire (42).

3. Turbomachine selon la revendication 2, dans laquelle l'enceinte (68) du boitier de transfert comprend une partie principale (68A) et une partie de jonction (68B) raccordée de façon étanche à la partie principale (68A), et au moins un desdits roulements (76) est positionné au niveau d'une ouverture de la partie principale (68A) sur laquelle la partie de jonction (68B) se raccorde.

4. Turbomachine selon l'une des revendications 2 ou 3, dans laquelle au moins un desdits roulements (76) se situe en partie radialement au niveau de l'ouverture (60) du carter annulaire (42).

5. Turbomachine selon l'une des revendications 2 à 4, dans laquelle l'enceinte (68) du boitier de transfert comprend une ouverture (70) à travers laquelle s'étend l'arbre creux (78) du boitier de transfert (50), ladite ouverture étant reliée à étanchéité à la portion élargie (56) du bras de guidage, de manière à former une seule cavité étanche comprenant l'intérieur du bras de guidage (44) et l'intérieur de l'enceinte, des moyens d'étanchéité (72) reliant l'enceinte au bras de guidage étant disposés à l'intérieur du carter annulaire (42) de la turbomachine.

6. Turbomachine selon l'une des revendications précédentes, dans laquelle l'extrémité radialement extérieure (64) de l'arbre de renvoi radial (48) est située radialement à l'intérieur du carter annulaire (42) de la turbomachine.

7. Turbomachine selon l'une des revendications précédentes, comprenant un circuit de vidange d'huile du boitier de transfert (50), dans lequel, au moins deux pompes (90) de récupération d'huile sont reliées respectivement à deux orifices (88) d'évacuation d'huile traversant chacun une paroi de fond (680) du boitier de transfert et éloignés l'un de l'autre selon une direction transversale de la turbomachine.

8. Turbomachine selon l'une des revendications précédentes, comprenant un bras de guidage supérieur et un bras de guidage inférieur (44) s'étendant sensiblement verticalement depuis deux côtés opposés du moyeu (38) jusqu'au carter annulaire (42) de la turbomachine, le boitier de transfert (50) étant disposé sous le bras de guidage inférieur (44), dans laquelle un arbre de transfert (52) relie en rotation le boitier de transfert (50) à un boitier d'accessoires (46) de la turbomachine disposé en périphérie du carter annulaire (42) de la turbomachine dans un secteur angulaire différent des secteurs angulaires où se situent le bras de guidage supérieur et le bras de guidage inférieur (44).

9. Turbomachine selon la revendication 8, dans laquelle le boitier d'accessoires (46) porte un générateur électrique entrainé par l'arbre de renvoi radial (48), par l'intermédiaire des moyens de transfert (76, 78) et de l'arbre de transfert (52).

10. Turbomachine selon l'une des revendications précédentes, dans laquelle le carter annulaire (42) de la turbomachine est recouvert intérieurement par un panneau d'atténuation acoustique comportant une surface radialement intérieure léchée par un flux d'air secondaire de la turbomachine, et dans laquelle au moins 90% du volume de la portion élargie (56) du bras de guidage (44) est situé dans l'épaisseur radiale du panneau d'atténuation acoustique.

11. Turbomachine selon la revendication 10, dans laquelle une partie de la portion élargie (56) du bras de guidage (44), représentant moins de 10% du volume de ladite portion élargie (56), s'étend au-delà de la surface radialement intérieure du panneau d'atténuation acoustique et est profilée de façon à minimiser son impact sur l'écoulement du flux d'air secondaire autour du bras de guidage (44).

12. Ensemble propulsif comprenant une turbomachine (10) selon l'une des revendications précédentes, laquelle est agencée à l'intérieur d'une nacelle (54), un espace annulaire étant formé entre le carter (42) de la turbomachine et la nacelle, ledit espace annulaire étant radialement de dimension plus réduite au niveau du secteur angulaire où se trouve le boitier de transfert (50) qu'au niveau du secteur angulaire dans lequel se situe ledit au moins un équipement entrainé en rotation.

## Patentansprüche

1. Turbotriebwerk (10), wie etwa Turbostrahltriebwerk oder Turboprop-Triebwerk, das sich entlang einer Antriebsachse erstreckt und enthält:
- zumindest einen hohl ausgeführten Führungsarm (44), der sich radial bezüglich der Antriebsachse von einer Nabe (38) ausgehend bis zu einem ringförmigen Gehäuse (42) des Turbotriebwerks erstreckt, ein radial äußeres Ende aufweist, das an das ringförmige Gehäuse (42) befestigt ist, und in eine Öffnung (60) des ringförmigen Gehäuses mündet,
- eine radial verlaufende Umlenkwelle (48), die in dem Führungsarm (44) liegt und dazu bestimmt ist, zumindest eine am Umfang des ringförmigen Gehäuses (42) angeordnete Apparatur drehend anzutreiben,
- ein Verteilergetriebe (50), das der Öffnung (60) des ringförmigen Gehäuses gegenüberliegend angeordnet ist und Übertragungsmittel (76, 78) zum Übertragen der Drehkraft zwischen radial verlaufender Umlenkwelle (48) und Apparatur aufweist,
**dadurch gekennzeichnet, dass** der Führungsraum (44) an seinem radial äußeren Ende mit einem Erweiterungsabschnitt (56) versehen ist, über welchen er in die Öffnung (60) des ringförmigen Gehäuses mündet und in welchem ein Teil des Verteilergetriebes (50) angeordnet ist.

2. Turbotriebwerk nach Anspruch 1, wobei die Übertragungsmittel (76, 78) zum Übertragen der Drehkraft des Verteilergetriebes (50) eine Hohlwelle (78) aufweisen, enthaltend:
- innere Rillen (82) an einem radial inneren Ende (80) der Hohlwelle, wobei die Rillen zwischen äußeren Rillen (66) ausgebildet sind, die an einem radial äußeren Ende (64) der Umlenkwelle (48) ausgebildet sind,
- und ein Kegelritzel (84), das koaxial zur Hohlwelle verläuft,
wobei die Hohlwelle (78) des Verteilergetriebes über Wälzlager (76) gehalten wird, die innerhalb eines Raums (68) des Verteilergetriebes angeordnet sind, wobei der Raum teilweise in dem Erweiterungsabschnitt (56) des Führungsarms (44) radial innerhalb des ringförmigen Gehäuses (42) positioniert ist.

3. Turbotriebwerk nach Anspruch 2, wobei der Raum (68) des Verteilergetriebes einen Hauptabschnitt (68A) und einen Verbindungsabschnitt (68B) enthält, der abgedichtet mit dem Hauptabschnitt (68A) verbunden ist, und wobei zumindest eines der Wälzlager (76) im Bereich einer Öffnung des Hauptabschnitts (68A) positioniert ist, an die sich der Verbindungsabschnitt (68B) anschließt.

4. Turbotriebwerk nach einem der Ansprüche 2 oder 3, wobei zumindest eines der Wälzlager (76) sich teilweise radial im Bereich der Öffnung (60) des ringförmigen Gehäuses (42) befindet.

5. Turbotriebwerk nach einem der Ansprüche 2 bis 4, wobei der Raum (68) des Verteilergetriebes eine Öffnung (70) aufweist, durch die hindurch sich die Hohlwelle (78) des Verteilergetriebes (50) erstreckt, wobei die Öffnung abgedichtet mit dem Erweiterungsabschnitt (56) des Führungsarms so verbunden ist, dass ein einziger dichter Hohlraum gebildet wird, der das Innere des Führungsarms (44) und das Innere des Raums aufweist, wobei Dichtmittel (72), die den Raum mit dem Führungsarm verbinden, innerhalb des ringförmigen Gehäuses (42) des Turbotriebwerks angeordnet sind.

6. Turbotriebwerk nach einem der vorangehenden Ansprüche, wobei das radial äußere Ende (64) der radial verlaufenden Umlenkwelle (48) radial innerhalb des ringförmigen Gehäuses (42) des Turbotriebwerks liegt.

7. Turbotriebwerk nach einem der vorangehenden Ansprüche, enthaltend einen Ölablasskreislauf für das Verteilergetriebe (50), in welchem zumindest zwei Ölrückgewinnungspumpen (90) mit zwei jeweiligen Ölabführöffnungen (88) verbunden sind, die jeweils eine Bodenwand (680) des Verteilergetriebes durchsetzten und in Querrichtung des Turbotriebwerks voneinander beabstandet sind.

8. Turbotriebwerk nach einem der vorangehenden Ansprüche, enthaltend einen oberen Führungsarm und einen unteren Führungsarm (44), die sich im Wesentlichen vertikal von zwei entgegengesetzten Seiten der Nabe (38) bis zum ringförmigen Gehäuse (42) des Turbotriebwerks erstrecken, wobei das Verteilergetriebe (50) unter dem unteren Führungsarm (44) angeordnet ist, wobei eine Übertragungswelle (52) das Verteilergetriebe (50) drehend mit einem Zusatzgetriebe (46) des Turbotriebwerks verbindet, das am Umfang des ringförmigen Gehäuses (42) des Turbotriebwerks in einem anderen Winkelsektor als die Winkelsektoren angeordnet ist, wo sich der obere Führungsarm und der untere Führungsarm (44) befinden.

9. Turbotriebwerk nach Anspruch 8, wobei das Zusatzgetriebe (46) einen Stromerzeuger trägt, der von der radial verlaufenden Umlenkwelle (48) über die Übertragungsmittel (76, 78) und die Übertragungswelle (52) angetrieben werden.

10. Turbotriebwerk nach einem der vorangehenden Ansprüche, wobei das ringförmige Gehäuse (42) des Turbotriebwerks innen mit einer Schalldämpfungsplatte überdeckt ist, die eine radial innere Fläche aufweist, welche von einem Sekundärluftstrom des Turbotriebwerks überstrichen wird, und wobei zumindest 90% des Volumens des Erweiterungsabschnitts (56) des Führungsarms (44) in der radialen Dicke der Schalldämpfungsplatte liegt.

11. Turbotriebwerk nach Anspruch 10, wobei ein Teil des Erweiterungsabschnitts (56) des Führungsarms (44), der weniger als 10 % des Volumens des Erweiterungsabschnitts (56) darstellt, sich über die radial innere Fläche der Schalldämpfungsplatte hinaus erstreckt und so profiliert ist, dass seine Auswirkung auf die Strömung des Sekundärluftstroms um den Führungsarm (44) herum minimiert wird.

12. Antriebseinheit mit einem Turbotriebwerk (10) nach einem der vorangehenden Ansprüche, die innerhalb einer Gondel (54) angeordnet ist, wobei ein ringförmiger Raum zwischen dem Gehäuse (42) des Turbotriebwerks und der Gondel ausgebildet ist, wobei der ringförmige Raum radial eine kleinere Abmessung hat als im Bereich des Winkelsektors, wo sich das Verteilergetriebe (50) im Bereich des Winkelsektors befindet, in welchem die zumindest eine drehend angetriebene Apparatur liegt.

## Claims

1. A turbine engine (10), such as a turbojet or a turboprop, extending along a motor axis and comprising:
- at least one hollow guidance arm (44) radially extending relative to the motor axis from a hub (38) to an annular casing (42) of the turbine engine, having a radially external end secured to said annular casing (42) and opening out in an opening (60) of said annular casing,
- one radial countershaft (48) positioned in said guidance arm (44) for rotatably driving at least one device arranged at the periphery of said annular casing (42),
- a transfer case (50) positioned facing the opening (60) of the annular casing and comprising rotational power transfer means (76, 78) between the radial countershaft (48) and the device,
**characterized in that** the guidance arm (44) is equipped, at the radially external end thereof, with a widened section (56) by which it opens out in the opening (60) of the annular casing and in which a portion of the transfer case (50) is accommodated.

2. A turbine engine according to claim 1, wherein the rotational power transfer means (76, 78) of the transfer case (50) comprise a hollow shaft (78) comprising:
- Internal splines (82) at a radially internal end (80) of the hollow shaft, with said splines being engaged between external splines (66) formed at a radially external end (64) of the countershaft (48),
- and a bevel gear (84) coaxial with the hollow shaft,
with the hollow shaft (78) of the transfer case being held by bearings (76) configured inside an enclosure (68) of the transfer case, with said enclosure being partly positioned in the widened portion (56) of the guidance arm (44) radially inside the annular casing (42).

3. A turbine engine according to claim 2, wherein the enclosure (68) of the transfer case comprises a main portion (68A) and a linking portion (68B) sealingly connected to the main portion (68A), and at least one of said bearings (76) is positioned at an opening of the main portion (68A) whereto the linking portion (68B) is connected.

4. A turbine engine according to one of claims 2 or 3, wherein at least one of said bearings (76) is partially radially positioned at the opening (60) of the annular casing (42).

5. A turbine engine according to one of claims 2 to 4, wherein the enclosure (68) of the transfer case comprises an opening (70) through which the hollow shaft (78) of the transfer case (50) extends, with said opening being sealingly connected to the widened portion (56) of the guidance arm so as to form a single sealed cavity comprising the inside of the guidance arm (44) and the inside of the enclosure, with sealing means (72) connecting the enclosure with the guidance arm being configured inside the annular casing (42) of the turbine engine.

6. A turbine engine according to one of the preceding claims, wherein the radially external end (64) of the radial countershaft (48) is located radially inside the annular casing (42) of the turbine engine.

7. A turbine engine according to one of the preceding claims, comprising a transfer case (50) oil drain circuit, wherein at least two oil recovery pumps (90) are respectively connected to two oil discharge ports (88) each passing through a bottom wall (680) of the transfer case and distant from each other in a transverse direction of the turbine engine.

8. A turbine engine according to one of the preceding claims, comprising an upper guidance arm and a lower guidance arm (44) extending substantially vertically from two opposing sides of the hub (38) to the annular casing (42) of the turbine engine, with the transfer case (50) being configured under the lower guidance arm (44), wherein a transfer shaft (52) rotatably connects the transfer case (50) to an accessory box (46) of the turbine engine configured at the periphery of the annular casing (42) of the turbine engine in an angular sector different from the angular sectors where the upper guidance arm and lower guidance arm (44) are located.

9. A turbine engine according to claim 8, wherein the accessories case (46) carries an electric generator driven by the radial countershaft (48) via the transfer means (76, 78) and the transfer shaft (52).

10. A turbine engine according to one of the preceding claims, wherein the annular casing (42) of the turbine engine is internally covered with an acoustic attenuation panel comprising a radially internal surface swept over by a secondary air stream from the turbine engine, and wherein at least 90% of the volume of the widened portion (56) of the guidance arm (44) is located in the radial thickness of the acoustic attenuation panel.

11. A turbine engine according to claim 10, wherein a portion of the widened portion (56) of the guidance arm (44), representing less than 10% of the volume of said widened portion (56) extends beyond the radially internal surface of the acoustic attenuation panel and is so contoured as to minimize the impact thereof on the flow of the secondary air stream around the guidance arm (44).

12. A propulsion system comprising a turbine engine (10) according to one of the preceding claims, which is arranged inside a nacelle (54), with an annular space being formed between the casing (42) of the turbine engine and the nacelle, with said annular space being radially smaller in dimension at the angular sector where the transfer case is located (50) than at the angular sector where said at least one rotatably driven device is located.
